# EUROPEAN PATENT APPLICATION

(11) **EP 2 530 505 A1**
(43) Date of publication of application: **05.12.2012**
(21) Application number: 12005244.4
(22) Date of filing: 09.08.2010
(51) Int. Cl.: G02B 6/44

(54) **Tray assembly and Storage Tray for the Tray assembly**

(62) Divisional of application: 10008290.8
(71) Applicant: Tyco Electronics Raychem BVBA, 3010 Kessel-Lo (BE)
(72) Inventor: Diepstraten, Patrick Jacques Ann, 3550 Heusden-Zolder (BE); Neves Mendes, Luiz, 3130 Begijnendijk (BE); Schurmans, Eric, 3450 Hogen-Geetbets (BE); Michiels, Maarten, 3020 Herent (BE)
(74) Representative: Grünecker, Kinkeldey, Stockmair & Schwanhäusser

(57) **Abstract**

The present invention relates to a tray assembly for organizing a plurality of optical fibre cables adapted to form a loop. The tray assembly (1) comprises at least one storage tray (200), which comprises a fibre support plate (201) for receiving on a front surface side (202) thereof at least one optical fibre cable. The front surface side (202) is projected by a plurality of fibre support wall portions (203a, 203c) surrounding at least partially a loop storage area (204) for storing the at least one looped optical fibre cable. The tray assembly (1) comprises further a base (2) adapted to sealingly receive a cover for covering the at least one storage tray (200) and providing passageways (5) for sealingly guiding the optical fibre cable through said base (2), which base (2) is connected to a support (3) for holding the at least one storage tray (200). The storage tray (200) comprises at least one receiving opening (216) recessed within the loop storage area (204) for receiving at least one of the plurality of optical fibre cables, wherein the receiving opening (216) is L-shaped with a leg (218) ranging to a lateral end side (206) of the fibre support plate (201). Thus, the storage tray size may be efficiently used by the plurality of optical fibre cables.

## Description

The present invention relates to a tray assembly particularly for organizing a plurality of optical fibres and to a splice tray and a storage tray which can be provided with said tray assembly.

A tray assembly according to the preamble of claims 1 is e.g. known from EP 0 692 102 B1.

WO 94/27176 A1 discloses a further splice tray to be used for a cable box. Said splice tray comprises a circular disc-shaped support plate with a recessed segment. The support plate is protruded at its outer periphery by an external side wall forming two entrances at the circumferential end sides of the recessed segment. The entrance accommodates securing means for securing an optical fibre cable received by said entrance. The securing means comprises a plurality of openings which are formed in the support plate and which are aligned in two rows by which the optical fibre cable received in the entrance can be secured by means of threads or the like fixing the cable in the securing means. The securing means further comprises an insert body made of a plastic material, i.e. cellular rubber, which insert body has a plurality of securing grooves extending tangentially in relation to the circular center of the support plate. The securing grooves are arranged in parallel to the external side wall. The splice tray is adapted to be stackable on further splice trays having an identical shape.

EP 0 216 073 A1 discloses an other splice tray of a rectangular shape, wherein the splice tray provides at one lateral end side two entrances for receiving at least one optical fibre cable. The optical fibre cable received within the entrance is secured at the entrance against the splice support plate by securing means which comprises a plurality of securing grooves extending perpendicular to the entrance. The securing grooves are filled with an elastic or plastic material to clamp the optical fibre cable therein. The securing means is adapted to receive from a free upper side thereof a lid to fix the optical fibre cable received within the securing grooves. The splice tray is connected to a storage tray by means of an integral hinge provided at a lateral side which provides the entrances. The integral hinge protrudes the lateral side of the splice tray to an outside thereof and is formed between said two entrances. Thereby, the splice tray and the storage tray are pivotable with respect to each other. The storage tray is adapted to form a cover for the splice tray. The storage tray comprises a loop storage area in which a loop formed by an over-length of the optical fibre cable spliced in the splice tray can be stored. The storage tray can be fixed to the splice tray by means of screws insertable into fixation holes provided outside the loop storage area of the storage tray and the organizing area of the splice tray, respectively. The storage tray comprises a center hole aligned with a center hole recessed in the splice tray in order to stack and secure a plurality of thus formed splice tray and storage tray assemblies one to another.

The known tray assemblies are designed to store fibres and splices in a controlled way. An arrangement of the fibre and splices is selected to control fibre bending so as to comply with a critical bend radius of the optical fibre cable. The hinged feature of the trays provides protection of the fibres as well as easy access thereto. However, the commonly known tray assemblies comprise one or more hingeable splice trays which are based on the principle that the optical fibre cable inserted at the entrance of the tray is secured at the entrance by securing means used to keep the optical fibre cable always in the same position. Said securing means is conventionally formed so as to provide a plurality of securing grooves for receiving, from a front surface side of the splice tray, the optical fibre cables to be held in the securing grooves, respectively. By further operating the optical fibre cable received within the associated securing groove, there is a risk that the optical fibre cable may be disengaged from the securing means by slipping out of the securing groove.

Alternatively, said securing means are formed so as to provide a first fixation point for the received optical fibre cable at the entrance of the splice tray. Generally, a second fixation point for the optical fibre cable is formed in the passageway of the base guiding the optical fibre cable from one side of the base to the splice tray supported by the base. Optical fibre cables, e.g. ribbon fibre cables have a twisting behavior when said cable is bended. Accordingly, in the tray assembly forming two fixation points for the optical fibre cable between the passageway of the base and the entrance of the splice tray, there is a risk that the optical fibre cable, i.e. the optical fibre element guided by the optical fibre cable may be damaged or the transient behavior of the optical fibre element may be adversely influenced by e.g. a kink or the like when the splice tray is hinged. Thus, a certain minimum distance between the two fixation points is required to assure that no kink or the like may occur during splice tray hinging. As a consequence, extra space in the tray assembly is required to allow the optical fibre cable to move without kinking during hinging, resulting in respective large tray assemblies.

An object of the present invention is to provide an improved tray assembly for organizing a plurality of optical fibre cables, wherein the tray assembly provides a reliable securing for the received optical fibre cable and, preferable, a compact form.

The above object is solved by a tray assembly according to claim 1. The tray assembly comprises a storage tray which comprises at least one receiving opening recessed within the loop storage area for receiving at least one of the plurality of optical fibre cables. Thereby, storage space provided by the loop storage area may be used more efficiently, whereby a higher amount of optical fibre cables may be stored within the loop storage space without the necessity of increasing the basket side, and, respectively, the size of the tray assembly. Furthermore, the loop formed by the optical fibre cable may be arranged more concentrated and separately from other fibres such as spliced fibre, resulting in easier handling and more secured transient free handling of the respective optical fibre elements.

Additionally, the receiving opening is L-shaped with one leg extending to a lateral end side of the fibre support plate. Accordingly, a bent portion of the optical fibre cable may be inserted from the rear surface side of the fibre support plate to the front surface side thereof, wherein the leg forming a longitudinal opening is adapted to allow insertion of the bent portion which is formed by a radius larger than the critical bend radius of the optical fibre cable in order to prevent a kink in the bent portion during insertion thereof through the receiving opening. Preferably, the receiving opening is T-shaped. In this context, the T-shape is considered as being formed of two L-shaped openings connected with each other. Thus, the present invention is not to be construed to be limited to an exactly L- or T-shaped receiving opening. In the sense of the present invention, the L-shaped receiving opening may be achieved at least by two longitudinal openings extending transverse to each other and communicating with each other. For instance, a cross-shaped receiving opening will also be considered as being formed of an L-shaped receiving opening, as the cross-shaped receiving opening may be regarded as being achieved by at least two L-shaped openings connected with each other.

In addition to the above, the leg ranging to the lateral end side of the fibre support plate may be preferably disposed in a central area of the fibre support plate to extend in said central area to the lateral end side of the fiber support plate. The central area of the fibre support plate corresponds to an area through which a central axis of the fibre support plate extends. Thus, the storage space of the loop storage area may be further more efficiently used and the configuration of the fibre support plate may be further simplified.

Preferably, the storage tray is formed of an injection molded plastic material. Further preferable, the plurality of fibre support wall portions are formed integrally with said fibre support plate by the process of injection molding of a plastic material. Preferably, the storage tray comprises an outer fibre support wall portion which preferably extends continuously at the lateral sides of the fibre support plate except the lateral side of the storage tray which opposes the base in a supported state of the storage tray. Said outer fibre support wall portion provides with its surface side facing the loop storage area abutment faces for the looped optical fibre cable to be stored in the loop storage area. Further preferable, said outer fibre support wall portion supports a plurality of holding ribs projecting the loop storage area for holding the looped optical fibre cable therein.

Furthermore, the storage tray may comprise a lateral fibre support wall portion at the lateral end side of the fibre support plate not provided with the outer fibre support wall portion. Said lateral fibre support wall portion has preferably a C-shape at least with curved end portions formed by a radius larger than the critical bend radius of the optical fibre cable to be stored in the loop storage area. The storage tray further comprises a lateral storage tray entrance to the loop storage area, which lateral storage tray entrance is provided between said curved end portions of the lateral fibre support wall portion and a thereto opposing surface side of the outer fibre support wall portion. In the sense of the present invention, an entrance is not to be construed to be limited to a function of receiving an optical fibre cable. Said entrance may be preferably used as an inlet and outlet for guiding an optical fibre cable to a front surface side of the tray, i.e. the splice tray or the storage tray, and also from said front surface side to an outside of the respective tray. The lateral storage tray entrance may preferably be formed with at least one recessed opening in the fibre support plate, which at least one recessed opening comprising at least one T-shaped protrusion bar protruding from an opening rim of the recessed opening. Said recessed opening with the at least one protrusion bar provides a retaining portion for retaining e.g. by means of a tie-wrap an incoming or outgoing optical fibre cable. Particularly, the incoming or outgoing optical fibre cable is supported by the protrusion bar, wherein the tie-wrap is wrapped around the protrusion bar with the thereon optical fibre cable to fix the optical fibre cable thereon. Accordingly, incoming and outgoing optical fibre cables/optical fibre elements may be reliably secured against the fibre support plate at the lateral storage tray entrance.

In a further preferred embodiment of the tray assembly according to claim 2, the optical fibre cables to be stored in the storage tray may be more efficiently organized. Particularly, the inner storage loop area may be preferably used for storing kinds of looped optical fibre cables other than that stored in the loop storage area. Further particularly, the loop storage area may be preferably used for looped optical fibre cables which are spliced on the splice tray, wherein the inner loop storage area may be preferably used for storing optical fibre cables to be operated at a later stage.

Preferably, said inner loop storage area is formed by a plurality of inner fibre support wall portions projecting the front surface side of the fibre support plate. Said inner loop storage area is preferably provided distant from the outer fibre support wall portions, thereby forming between said outer fibre wall support portions and the inner fibre support wall portions guiding channels for the looped optical fibre elements to be stored in the loop storage area. The inner loop storage area has preferably an oval shape, wherein the plurality of inner fibre support wall portions forms in extension direction several recesses therebetween. More preferable, a pair of recesses is directed to the lateral fibre support wall portion. A further pair of recesses is preferably arranged on an opposing side thereof. Thus, the optical fibre cable may be received within the inner loop storage area through the recesses. Exemplary, the optical fibre cable may be inserted through the receiving opening from the rear surface side of the fibre support plate and looped in the inner loop storage area, wherein the portions of the optical fibre cable not forming part of the loop extends through the recesses, respectively. Generally, looped optical fibre cables stored in the loop storage area and/or in the inner loop storage area may be inserted through the receiving opening depending on the preferred organizing structure selected by a technician.

Further preferably, the inner fibre support wall portions defining the inner loop storage area support a plurality of holding ribs projecting the front surface side of the fibre support plate for holding optical fibre elements stored in the inner loop storage area and/or in the loop storage area.

In a further preferred embodiment of the tray assembly according to claim 9, the parts of the optical fibre cable extending through the receiving opening may be moved to a front surface side of the fibre support plate after insertion of the optical fibre cable through the receiving opening in order to prevent a bending of the optical fibre cable in a supported state of the storage tray at opening rims defining the receiving opening. Accordingly, in the supported state of the storage tray, in which the storage tray is secured against the support, the optical fibre cable organized in the loop storage area and/or in the inner loop storage area may leave the storage tray at the front surface side of the fibre support plate even though previously inserted through the receiving opening from the rear surface side of the fibre support plate.

Particularly, in a further preferred embodiment, the tray assembly comprises at least one splice tray and at least one storage tray, which storage tray has the preferred configuration as described above and which splice tray has the configuration described in the following section.

According to a further embodiment according to claim 4, the tray assembly further comprises a splice tray. Particularly, the splice tray comprises securing means for guiding and securing the optical fibre cable received within the guiding path. The securing means are adapted to guide and hold the optical fibre cable preferably so as to prevent at least a cable twist or a cable bend or the like at a position of arrangement of the securing means, which position denotes a guiding and securing position for the optical fibre cable. By the provision of said securing means, transient losses of the optical fibre cable may be reduced. The securing means preferably provides a plurality of securing grooves extending parallel to an extension direction of the part of the guiding path which part receives the securing means. Said securing grooves are preferably adapted to accommodate, guide and secure, preferably by preventing a cable twist, a plurality of optical fibre cables which are inserted within the securing grooves preferably from a front surface side of the splice tray. The securing means may be formed of a plastic or elastic material, e.g. as cellular rubber. The securing means may be preferably formed of a separate part or, alternatively integral with the splice tray, that is the securing means and the splice tray may preferably form one structural member. The securing means may be formed of any shape and/or material suitable for at least preventing a cable twist of the received optical fibre cable. In the sense of the present invention, an optical fibre cable may be a ribbon- or band-like fibre cable or a single optical fibre element. Preferably, the securing means are adapted to guide the ribbon- or band-like optical fibre cable, wherein the securing means prevents at least a twist of the cable part received and guided by the securing means. Such ribbon- or band-like optical fibre cables comprises a plurality of optical fibre elements grouped into a ribbon or band.

Additionally, the splice tray comprises an entrance holding rib provided at the entrance, i.e. at the lateral side of the splice tray, or a guiding path holding rib spaced apart from the entrance, wherein the holding rib, i.e. the entrance holding rib and/or the guiding path holding rib, at least partially covers the guiding path by projecting the splice support plate with a height equal or smaller than that of the securing means. Further preferable, a projecting height of a lower side of the holding rib, which lower side faces the tray support plate, is smaller than a projecting height of a top side of the securing means, further preferably of a top side of a securing groove provided with the securing means for receiving therein the optical fibre cable, which top side faces away from the tray support plate. In other words, when viewed from the entrance side of the tray, the holding rib intersects a receiving opening of the securing means, i.e. of the securing groove, which receiving opening is provided for receiving the optical fibre cable. Preferably, further guiding path holding ribs may be provided along the guiding path, wherein each of the further guiding path holding ribs may cover the guiding path by projecting the splice support plate with a similar or different height with respect to the guiding path holding rib projecting the splice support plate with the height equal or smaller than that of the securing means. Due to said entrance holding rib or said guiding path holding rib, a coming out of the optical fibre cable from the securing means may be avoided as the optical fibre cable is guided within the guiding path in a height corresponding essentially to a height of the securing grooves receiving the optical fibre cable therein. In other words, the holding rib limits a vertical movement of the optical fibre cable with respect to the splice tray. Furthermore, as mentioned beforehand, the securing means provides a twist preventing function for the received optical fibre cable, preferably for the ribbon or band-like optical fibre cable by a respective shape of the securing groove, and allows simultaneously moving, i.e. displacement of the received optical fibre cable in its longitudinal direction, which moving capability provides a self-adjusting of the received optical fibre cable for instance during pivoting of the splice tray, whereby a break of the optical fibre cable can be prevented. Thereby, the optical fibre cable received by the securing means may be movably guided and twist-proof held, i.e. secured within the securing means. The entrance holding rib and/or the guiding path holding rib may be preferably formed of any means capable of preventing a coming out of the optical fibre cable from the securing means. Exemplary, the holding rib may have a plate shape or may be comprised of at least one bar having a round or polygonal cross sectional shape. Further preferable, the holding rib extends toward the guiding path essentially in parallel to the front surface side of the splice tray and projects one splice support wall portion at a lateral free end side thereof, wherein said splice support wall portion extends from the lateral end side of the splice tray, which lateral end side provides the entrance, toward an opposed lateral end side of the splice tray. More preferably, the holding rib is formed integrally with said splice support wall portion. According thereto, the configuration of the splice tray providing the holding rib may be further simplified.

The securing means received within the guiding path is preferably arranged downstream of the holding rib, i.e. the entrance holding rib or the guiding path holding rib, with respect to the lateral end side of the splice tray. Further preferable, the guiding path holding rib is arranged adjacent to the securing means. Accordingly, the holding rib is sandwiched in guiding path direction by the entrance at the lateral end side of the splice tray and the securing means received within the guiding path. Hence, the securing means is provided distant from the lateral end side of the splice tray. That is, the securing means received within the guiding path is provided distant from the entrance, which entrance is provided at said lateral end side of the splice support plate. In the sense of the present invention, a distant arrangement of the securing means with respect to the lateral end side, i.e. the entrance of the splice support plate provides a free movable receiving of the optical fibre cable at the entrance. In other words, the optical fibre cable is received substantially unhindered at the entrance and is free movably guided by the entrance to the guiding path and within the guiding path up to a certain distance from the entrance, wherein the optical fibre cable is further longitudinal displaceably held in the guiding path by the holding rib. Thus, the optical fibre cable may move, i.e. twist and bend in an area of the entrance to a certain extent during hinging of the splice tray, wherein said certain extent is defined by the parts of the splice support plate forming the entrance. Preferably, the distance between the lateral end side of the splice support plate and the position of arrangement of the securing means is 20 % or more of a width direction of the splice support plate which width direction extends from said lateral end side to an opposed lateral end side of the splice support plate. Further preferable, the distance is amount up to 30 % or more of the width direction, more preferable 50 % or more of the width direction of the fibre support plate.

Due to the arrangement of the securing means within the guiding path at a downstream side of the holding rib, i.e. distant from the lateral end side of the splice support plate, the risk of occurrence of kink in the optical fibre cable can be further reduced when the splice tray is hinged, as the distance between the two fixation points is increased thereby without increasing simultaneously the size of the tray assembly. In this context, the "fixation" point formed by the securing means according to the present invention is not to be construed as a point of fixation at which the optical fibre cable is stationary fixed, i.e. not displaceable in any directions. To the contrary, due to the specific shape of the securing means as described beforehand, the optical fibre cable is guided and secured at the position of the securing means such that the received optical fibre cable is at least displaceable in its longitudinal direction and twist-proof held at the fixation point on the tray side. Further, by meeting the minimum distance between said two fixation points with respect to the critical bend radius of the optical fibre cable, a size of the tray assembly can be further reduced as a certain part of the required fibre moving space formed between said two fixation points is moved onto a front surface side of the splice support plate. In other words, the fibre support plate overlaps partially with the required fibre moving space formed between the two fixation points provided by the base and the securing means. Additionally, the arrangement of the securing means distant from the lateral end side of the splice support plate may provide further space in the tray assembly in case a more compact design of the tray assembly is not preferred, wherein said gained space can be used for increasing the size of the splice tray or storage tray or other means provided with the tray assembly.

The splice tray may be preferably formed by injection molding of a plastic material. The splice support plate of the at least one splice tray has preferably a polygonal shape, more preferably a rectangular shape, whereby at least one edge portion of the splice support plate, which edge portion normally provide a certain space unusable for guiding or organizing the optical fibre cable, may be used as a handle element for the hingeable splice tray.

The plurality of splice support wall portions preferably provides a plurality of pairs of splice support wall portions extending in parallel with respect to each other, thereby forming therebetween the guiding path outside of the organizing area. Further preferable, the guiding paths are formed at opposing lateral end sides of the fibre support plate and sandwiching the organizing area. The space provided by the fibre support plate may be thereby efficiently used.

Additionally the splice holder arranged in the organizing area may be preferably adapted to hold a plurality of splices formed between at least two optical fibre elements. Further preferable, the splice holder provides a plurality of splicing grooves for receiving and securing therein, preferably by clamping, the splice formed between at least two optical fibre elements. Hence, a plurality of splices may be provided in a compact form. Preferably, the organizing area provides holding means for holding preferably at least one further splice holder or protection means protecting optical fibre terminations terminating in the organizing area. The holding means are preferably arranged adjacent to the splice holder and are adapted to align the optical fibre cable held thereby with the extension direction of the splicing grooves. Hence, means for guiding the optical fibre cable to the splicing groove may be likewise used for optical fibre cables provided for being held by the holding means.

Preferably, the organizing area and the guiding path are covered partially by a plurality of holding ribs which project the front surface side of the splice support plate for holding the received optical fibre cable in the organizing area and in the guiding path, respectively. Further preferably, the securing means is sandwiched by at least two holding ribs, wherein one of the holding ribs may be preferably constituted by the entrance holding rib or the guiding path holding rib and wherein the other one may be formed by the further guiding path holding rib. In other words, adjacent to one longitudinal end side of the securing means may be provided at least one holding rib, wherein adjacent to the other longitudinal end side of the securing means may be arranged at least one further holding rib. The holding ribs sandwiching the securing means need not to be arranged directly adjacent to the longitudinal end side of the securing means. At least one of the holding ribs may be preferably provided distant from the associated longitudinal end side of the securing means. The distance between said at least one holding rib and the longitudinal end side of the securing means in guiding path direction may be preferably selected so as to ensure a holding of the optical fibre cable received by the securing means in order to prevent a disengagement of the optical fibre cable from the securing means. A height of the one or more holding ribs with respect to the front surface side of the splice support plate may be preferably selected in compliance with the height set for the entrance holding rib.

Furthermore, the splice tray provides preferably a single guiding path extending from one lateral end side of the splice support plate along a periphery thereof and back to said lateral end side, thereby surrounding partially the organizing area and providing two entrances at said lateral end side. The guiding path further provides an opening to the organizing area at a side opposing the lateral end side, at which the entrance to the guiding path is formed. As the guiding path preferably extends at the lateral end sides of the fibre support plate, i.e. at the periphery of the splice support plate, the guiding path preferably provides curved portions at the edges of the polygonal or rectangular shaped splice support plate, wherein said curved portions are formed by a radius complying with the critical bend radius of the optical fibre cable in order to prevent the risk of occurrence of kinks during guiding the optical fibre cable received within the guiding path. Outside of said curved portions, the splice support plate may preferably provide the handle element as described above.

Additionally, the splice tray comprises preferably at the lateral end side at which the entrance of the guiding path is provided a hinge which projects said lateral end side and which is adapted to cooperate with the support to pivotably holding the splice tray by the support such that the entrance to the guiding path is arranged opposed to the base. The hinge is preferably formed of a pair of bars projecting the lateral end side of the splice support plate, wherein pins project said bars in parallel to said lateral end side. Moreover, the support provides preferably a frame comprising receiving holes for receiving the pins of said bars. Thereby, the splice tray may be pivotably supported by the support. Further preferable, the splice tray comprises between said pair of bars a splice tray attachment portion which projects the lateral end side opposing to the entrance of the guiding path. The splice tray attachment portion is preferably provided for cooperating with a splice tray engagement portion provided by the support for stationary holding the splice tray in case of need. The splice tray attachment portion may be preferably provided alternatively to the hinge. The splice tray attachment portion is further preferably formed of a slide-in module adapted to be inserted into a respective insertion hole provided by the splice tray engagement portion. The splice tray attachment portion may preferably comprise snapping means snapping into a snapping hole provided with the splice tray engagement portion for reliably securing the splice tray against the support. Further preferable, the hinge and/or the splice tray attachment portion are supported by a lateral splice support wall portion which is formed at the lateral end side of the splice support plate at which the entrance of the guiding path is provided.

Based on the above further preferred configuration of the splice tray, the space provided on the front side of the splice support plate may be efficiently used for organizing the optical cable received at the entrance and guided by the guiding path to the organizing part.

Further preferred embodiments of the inventive tray assembly are subject to the respective dependent claims.

According to a further preferred embodiment of the tray assembly according to claim 8, the releasable secured securing means may be simply replaced in case of damage. The securing of the securing means against at least one of the plurality of splice support wall portions assures a releasing of the securing means from a front surface side of the splice tray. Accordingly, an access to the rear surface side of the splice tray in order to release the securing means in case of securing the securing means against the splice support plate may be avoided. However, the present invention is not to be construed to be limited to a securing of the securing means against the splice support wall portions. As a matter of course, the securing means may be alternatively or in addition secured within the guiding path against the splice support plate in case of need.

According to a further aspect of the present invention, it is an object to provide a storage tray for the tray assembly.

Said object is solved by a storage tray according to claim 10. The splice tray and the storage tray may preferably adopt a configuration as described above with respect to preferred embodiments of the tray assembly.

The present invention will now be described in further detail by referring to preferred embodiments depicted in the accompanying drawings. In these drawings:
- Figs. 1A and 1 B: show a front and side view of a tray assembly according to a preferred embodiment of the present invention;
- Figs. 2A and 2B: show a front and side view of the tray assembly as shown in Figs. 1A and 1B, respectively, with hinged splice trays;
- Figs. 3: shows a perspective top view of the tray assembly as shown in Fig. 1A and 1 B;
- Fig. 4: shows a perspective side view of the tray assembly as shown in Figs. 2A and 2B;
- Figs. 5A to 5C: show a top view and perspective top views of a splice tray according to a preferred embodiment of the present invention;
- Fig. 6A: shows a perspective top view of a splice tray according to a further preferred embodiment of the present invention;
- Figs. 6B and 6C: show side views of the splice tray as shown in Fig. 6A;
- Figs. 6D-6F: show enlarged perspective top views of sections of the splice tray shown in Figs. 6A-6C; and
- Figs. 7A-7C: show a perspective top view, a top view and a perspective rear view, respectively, of a storage tray according to a preferred embodiment of the present invention.

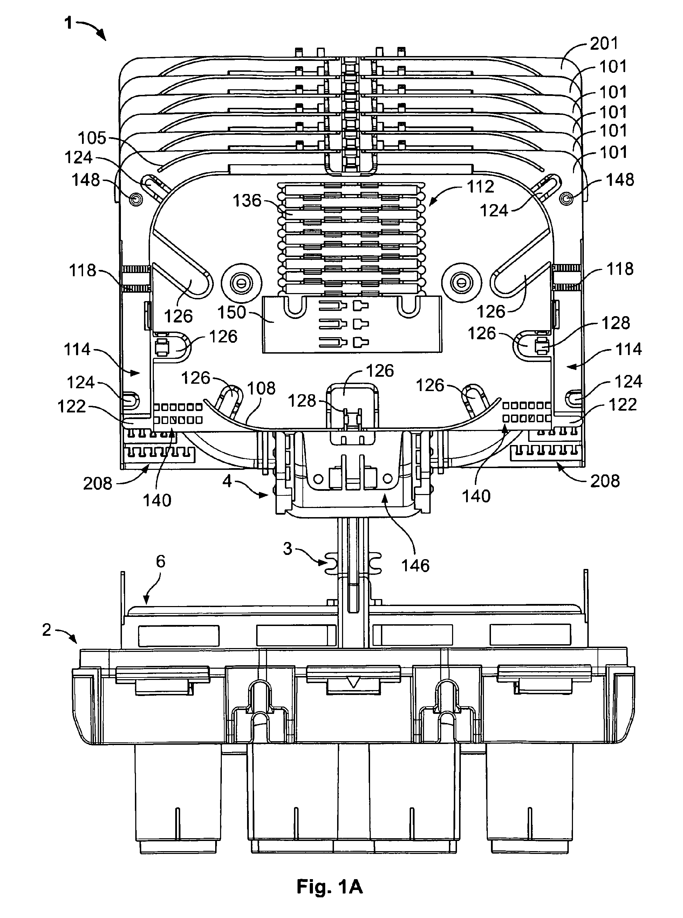

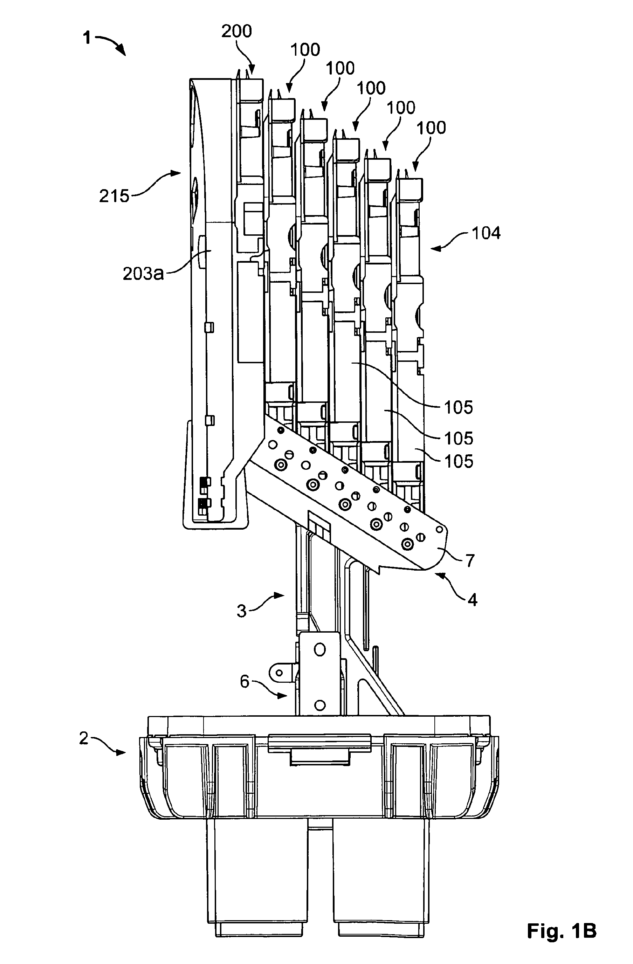

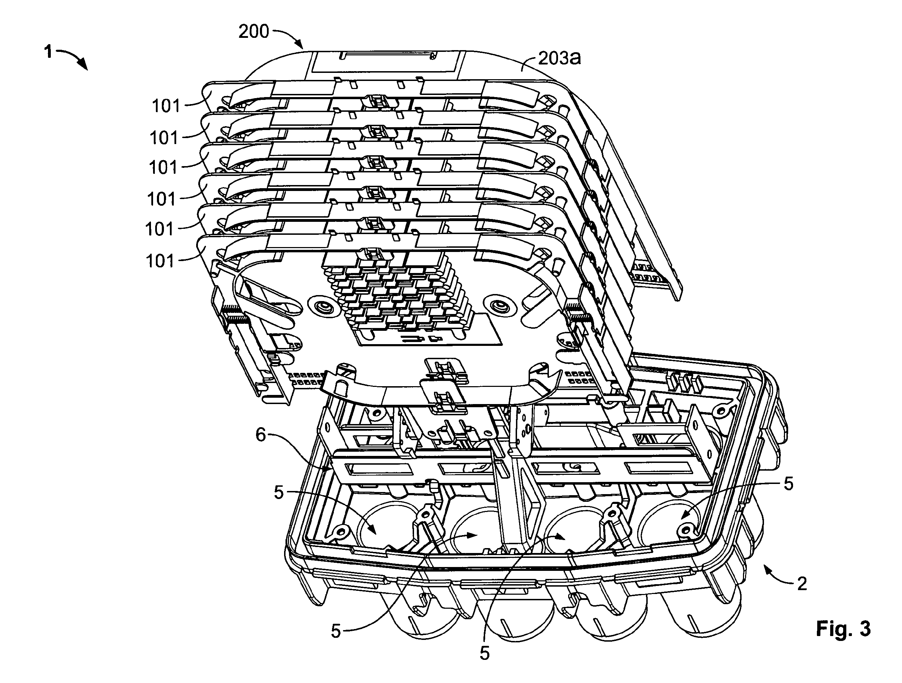

As shown in Figs. 1A to 4, the tray assembly 1 comprises a base 2, a support 3 connected to the base 2 and a frame 4 supported by the support 3 at an end side thereof which opposes the base 2. The base 2 is adapted to releasably and sealingly receive a cover for covering base side comprising the support 3 and the frame 4 (compare EP 0 692 102 B1). The base 2 comprises a plurality of passageways 5 for guiding therethrough a plurality of optical fibre cables from one side of the base 2 to the opposing side thereof. Each passageway 5 is adapted to seal therein at least one optical fibre cable guided by the passageway 5. Specifically, the base 2 comprises eight passageways 5 arranged in two rows of four passageways 5. However, the number of passageways 5 may vary depending on the number of optical fibre cables to be operated on the support side of the base 2.

The tray assembly 1 comprises at the support side thereof a guiding frame 6 which is arranged between the two rows of passageways 5 and which provides therebetween a longitudinal passage for guiding the optical fibre cables from the passageways 5 toward the frame 4. Thereby, the plurality of optical fibre cables may be guided controlled between the passageways 5 toward the frame 4. The guiding frame 6 is connected to support 3. The support 3 with the guiding frame 6 and the frame 4 are made from a metal material. However, said support and frames may be formed of another material, e.g. an injection moulded plastic material or ceramic.

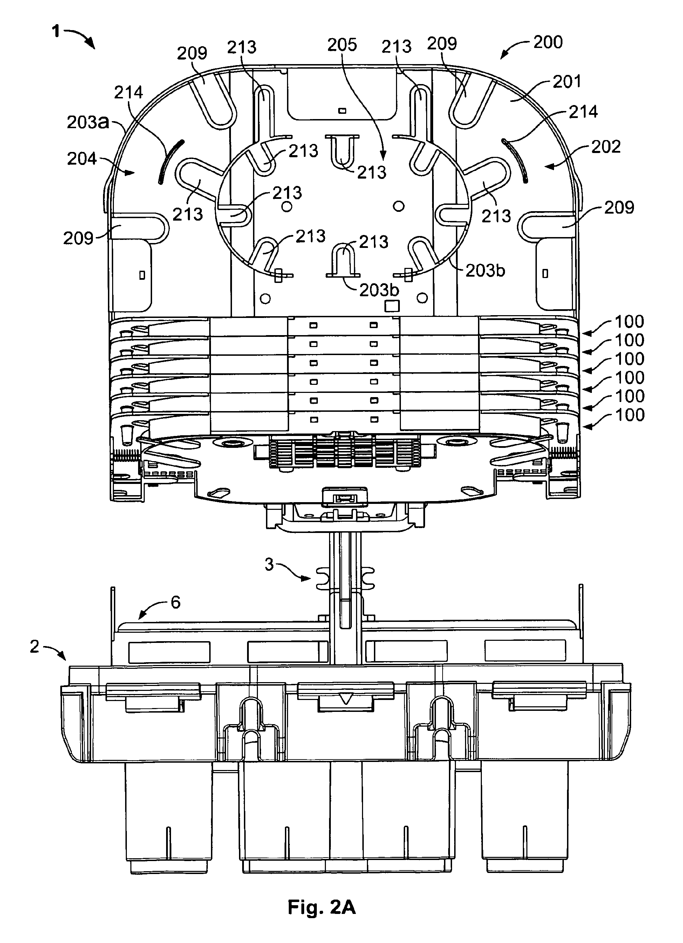

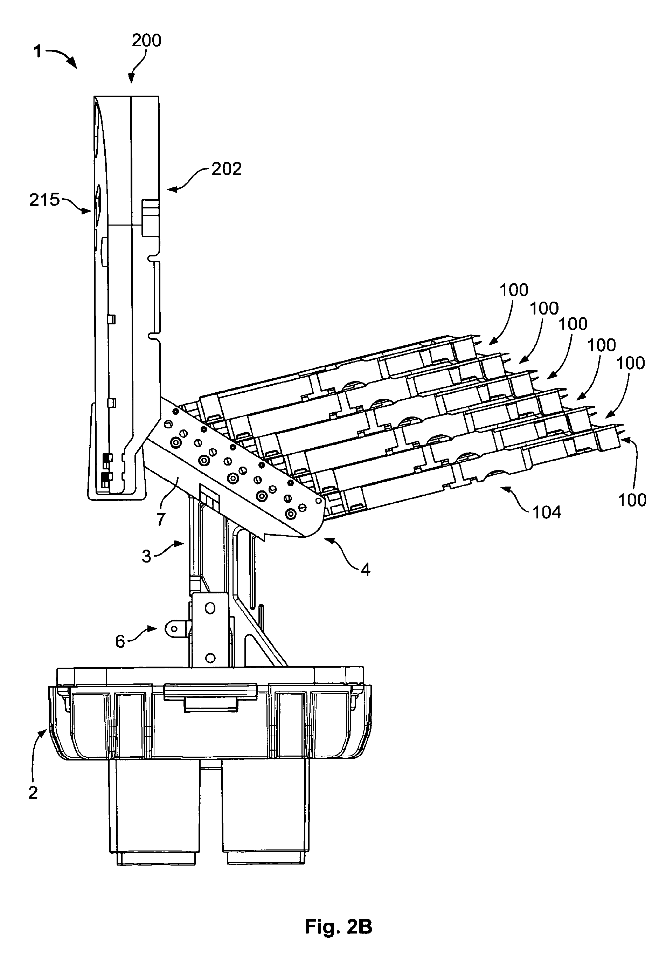

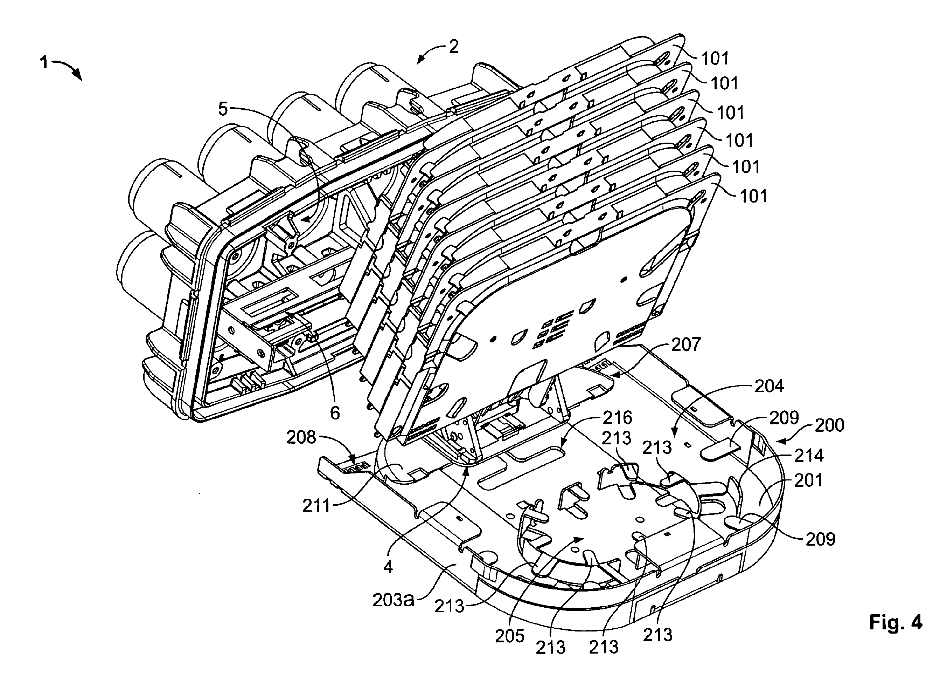

The frame 4 is triangular-shaped, wherein the frame 4 comprises two opposing frame side walls 4, each of said opposing frame side walls 7 comprises a plurality of receiving holes 8 arranged in a row. The frame side walls 7 are supported by the support 3 so as to provide the row of plurality of receiving holes 8 obliquely to a direction of extension of the support 3 with respect to the base 2. Thereby, a plurality of splice trays 100 can be supported by the frame 4 in a staggered manner. Further, the plurality of splice trays 100 can be arranged thereby in front of each other, wherein a front surface side 104 of one splice tray 100 is covered at least partially by a rear surface side 103 of the next splice tray 100. Accordingly, the splice tray 100 arranged at the foremost side of the frame 4 provides a cover for the splice tray 100 arranged on the rear side of the foremost splice tray 100. The plurality of splice trays 100 are arranged by the frame 4 such that a height of the tray assembly 1 increases with the number of splice trays 100 arranged behind the front splice tray 100. The splice trays 100 may be arbitrarily arranged on the frame 4. However, an arrangement of the splice trays 100 directly adjacently to each other is preferred, as the front splice tray 100 may form a cover for the rear splice tray 100. Thus, only one further cover for the foremost splice tray 100 may be preferably required. As further particularly shown in Figs. 2A, 2B and 4, the plurality of splice trays 100 are arranged and supported pivotably by the frame 4.

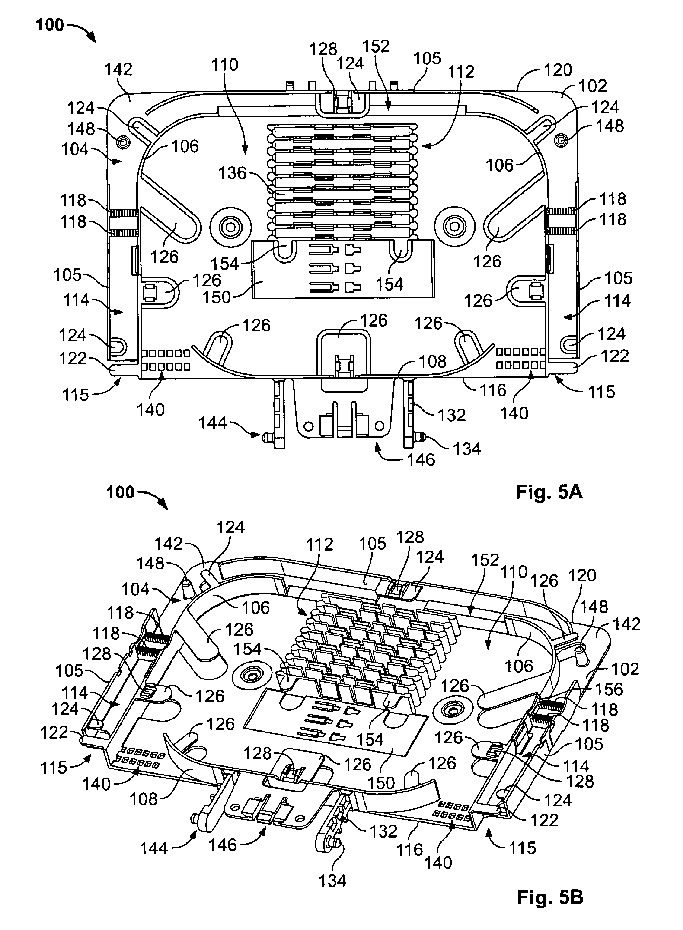

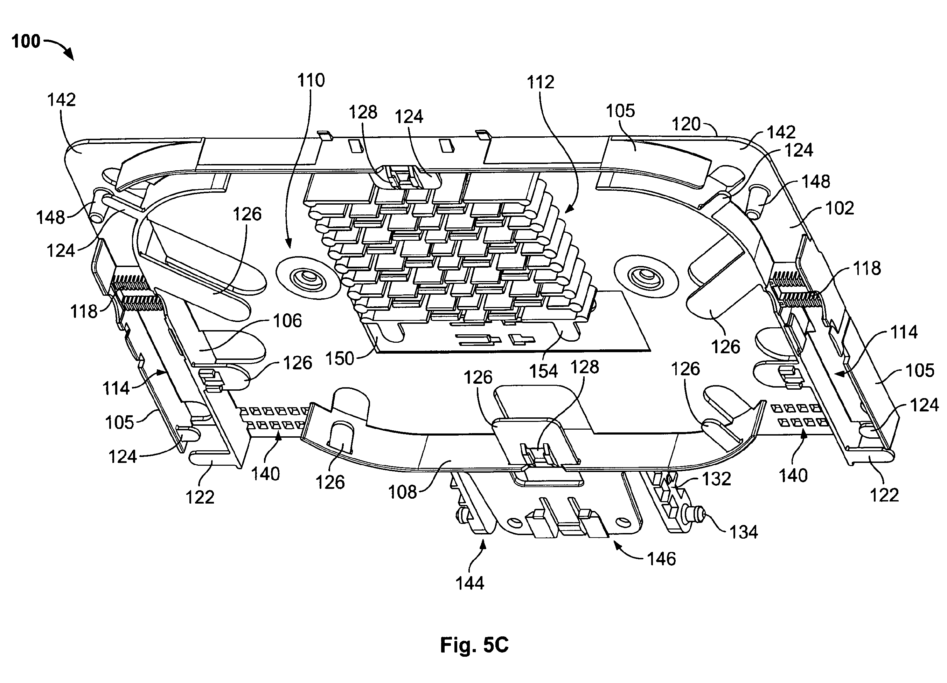

Figs. 5A to 5C show different views of the front surface side 104 of the splice tray 100 according to a preferred embodiment. The splice support plate 102 has a rectangular shape. The splice tray 100 comprises a splice support plate 102 which is projected on the front surface side 104 by a plurality of splice support wall portions 105, 106, 108. The splice support wall portions comprise three outer splice support wall portions 105, two inner splice support wall portions 106 and a lateral splice support wall portion 108, which all surround an organizing area 110. Furthermore, the outer and inner splice support wall portions 105, 106 provide therebetween a guiding path 114 surrounding the organizing area 110 at three lateral end sides of the splice support plate 102. In particular, the outer splice support wall portions 105 protrude laterally from the front surface side 104 of the splice support plate 102. Adjacent thereto and further inside of the splice support plate 102, the two inner splice support wall portions 106 protrude from the front surface side 104 essentially parallel to the outer splice support wall portions 105, whereby the guiding path 114 is formed therebetween. The inner splice support wall portion 106 is essentially L-shaped when viewed from the front surface side 104. The inner splice support wall portions 106 extend essentially parallel to opposing lateral end sides of the splice support plate 102 from one lateral end side 116 of the splice support plate 102 toward an opposed lateral end side 120, wherein each of the inner splice support wall portions 106 terminates in a curved wall portion, the free end of which extends parallel to the opposed lateral end side 120 to a predetermined extent. Thus, an opening is provided between opposing end side faces of the curved wall portions, wherein said opening provides an entrance 152 for the organizing area 110. The inside surfaces of said inner splice support wall portions 106 provide abutment faces for an optical fibre cable to be organized within the organizing area 110. The curved wall portions are formed preferably by a radius larger than the critical bend radius of the optical fibre cable to be organized within the organizing area 110.

Moreover, each of said inner splice support wall portions 106 provides two loop storage holding ribs 126 projecting the organizing area 110 for holding a looped optical fibre cable therein. The loop storage holding ribs 126 provided near the lateral end side 116 provide lid attachment means 128 for receiving a lid for covering at least the organizing area 110. Preferably, the lid (not shown) is adapted to fully cover the splice support plate 102. Accordingly, the splice tray 100 forming the foremost splice tray 100 of the tray assembly 1 may be likewise covered in order to protect the optical fibre cables organized on the front surface side 120 of the splice support plate 102.

In addition, the inner splice support wall portions 106 supports each at the lateral end side 116 an entrance holding rib 122, which extends toward the guiding path 114 essentially in parallel to the front surface side 104 of the splice support plate 102. The entrance holding rib 122 with the inner splice support wall portion 106 supporting said entrance holding rib 122 provide an entrance 115 for the optical fibre cable to the guiding path 114.

The inner splice support wall portions 106 further support a guiding path holding rib 124 in an area of their respective curved wall portions for partially covering the guiding path 114. Said guiding path holding ribs 124 project the front side surface 104 of the splice support plate 102 outside the organizing area 110.

Moreover, two of the outer splice support wall portions 105 which oppose each other, extend from the entrance holding rib 122 toward the opposing lateral end side 120 in parallel to a straight wall portion of the inner splice support wall portion 106. In other words, the outer splice support wall portion 105 terminates before the opposed lateral end side 120 is reached. Furthermore, the remaining outer splice support portion 105 arranged at the opposed lateral end side 120 provides a C-shape when viewed from the front surface side 104 and is shorter than a longitudinal length of the opposed lateral end side 120. Thus, a space is formed between said two outer splice support wall portions 105 at respective lateral sides of the splice support plate 102. In each space, a protruding pin 148 is arranged on a virtual curved line connecting longitudinal ends of the spaced outer splice support wall portions 105. Each protruding pin 148 provides an abutment for the optical fibre cable guided within the guiding path 114. Thereby, a region outside the guiding path 114 and near the protruding pin 148, which is a region including an edge of the splice support plate 102, provides a handle element 142 for handling the splice tray 100. Particularly, by said handle element 142, the splice tray 100 may be pivoted without interference of the optical fibre cable received within the organizing area 110 and the guiding path 114, respectively.

The outer splice support wall portion 105 opposing the organizing area entrance 152 supports in the area of the organizing area entrance 152 a further guiding path holding rib 124. Said guiding path holding rib 124 provides on its surface side opposing the front surface side 104 a further lid attachment means 123.

Distant from the lateral end side 116, i.e. distant from the entrance 115, the guiding path 114 receives a securing means 118 for guiding and securing the optical fibre cable received within the guiding path 114. The securing means 118 is insertable into the guiding path 114 from the front surface side 104. The securing means 118 comprises two securing bars spaced with respect to each other. The securing bars are connected to each other by a bridging element 156 which connects the longitudinal end sides of the securing bars. The securing means 118 may be secured in the guiding path 114 by any known means suitable for securing an insert in a U-shaped path. Exemplary, the bridging element 156 may be used to be hooked into a respective engagement provided with the splice support wall portions 105, 106. Alternatively, the securing means 118 may be clamped into the guiding path 114. In the secured state of the securing means 118, each securing bar bridges the guiding path 114 perpendicular to its extension direction. Furthermore, each securing bar provides a plurality of securing grooves 138 extending in parallel to the extension direction of the guiding path 114. The securing grooves 138 are adapted to receive at least one optical fibre cable. The securing means 118, particularly the securing bars are formed of an elastically or plastic material which provide a guiding and securing function for the received optical fibre cable without damaging it. The securing means 118 provide a fixation point for the optical fibre cable on the splice support plate 102. Particularly, the securing means 118 prevents a twist of the therein stored optical fibre cable and, further, the securing means 118 together with the entrance holding rib 122 or/and any of the other holding ribs 124 limit the vertical movement of the stored optical fibre cable with respect to front surface side 104.

The securing means 118 can be one part with the tray 100 or can be a separate part that is fixed to the tray 100.

As further shown in Fig. 5A to 5C, the lateral splice support wall portion 108 is essentially formed of a C-shape when viewed from the front surface side 104. The longitudinal end sides of the lateral splice support wall portion 108 are arranged distant to the opposing inner splice support wall portion 106, thereby providing a space therebetween. In the area of said space, the splice support plate 102 is recessed by a plurality of openings arranged in two rows, wherein said recessed openings provides a retaining portion for securing thereon incoming or outgoing optical fibre cables e.g. by means of a tie wrap insertable through respective recessed openings. Each area provides a fixation for five optical fibre cables.

The lateral splice support wall portion 108 supports three loop storage holding ribs 126, wherein two of said loop storage holding ribs 126 are supported by the curved ends of the lateral splice support wall portion 108. The loop storage holding rib 126 arranged at a middle of the lateral splice support wall portion 108 provides on a surface side opposing the organizing area 110 further lid attachment means 123. Thus, the splice tray 100 provides at each lateral side one lid attachment means 123 for receiving the lid. Accordingly, the lid may be reliably secured against the splice tray 100.

The organizing area 110 accommodates a splice holder 112 for holding splices formed between at least two optical fibre cables. The splice holder 112 is arranged near the organizing area entrance 152 and is formed of a plurality of splice grooves 136 extending in parallel to the opposing lateral end sides 116 and 120. In particular, nine splice grooves 136 are provided. The splice holder 106 may be configured as commonly known in the technical field of fibre splicing. Additionally, the organizing area 110 accommodates holding means 150 for holding, for instance, modular splice holders or protection means for protecting uncovered fibre ends. The holding means 150 are arranged between said splice holder 112 and the lateral splice support wall portion 108 and directly adjacent to said splice holder 112. Said holding means 150 are projected by two further holding ribs 154 supported by the splice holder 112 for holding means attached to the holding means 150.

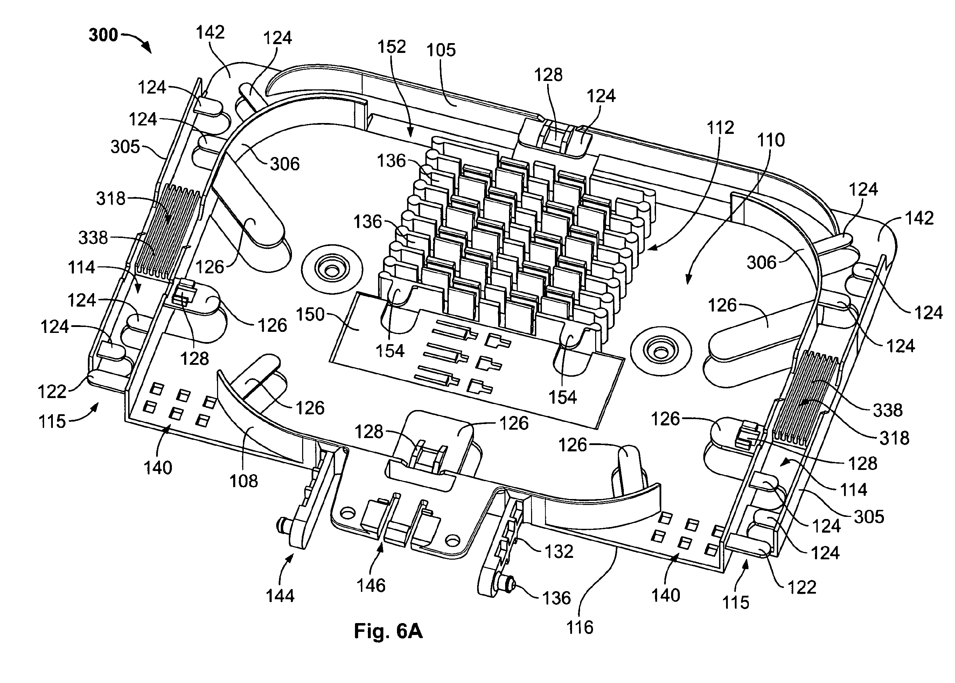

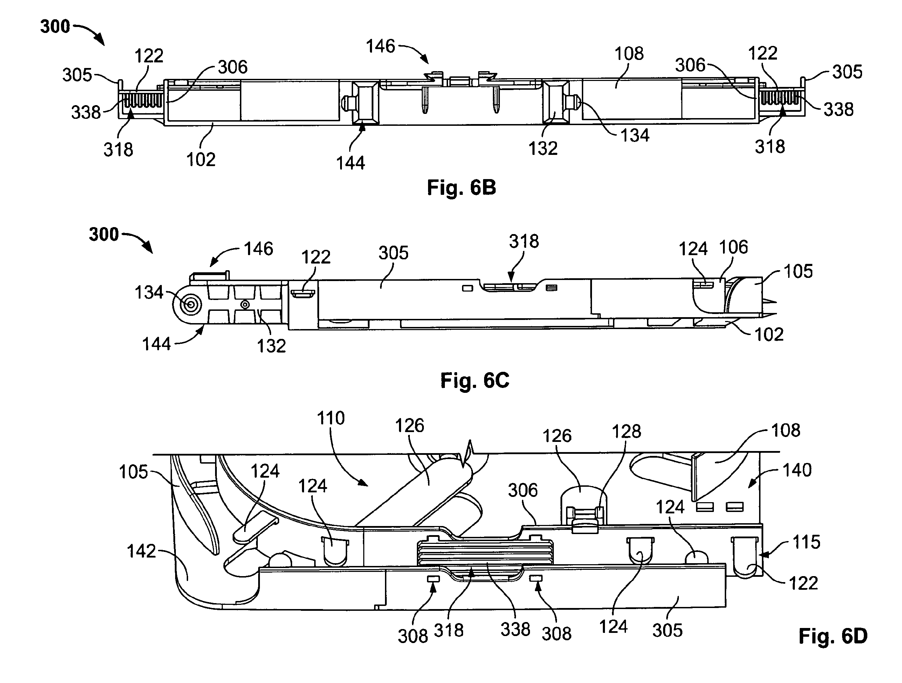

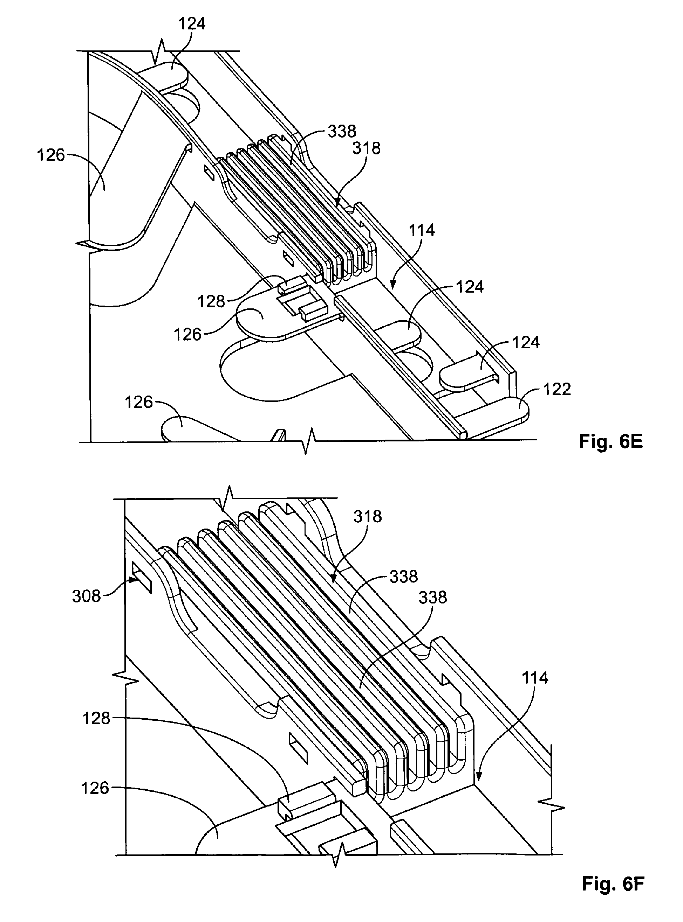

Figs. 6A-6F show different views of a splice tray 300 according to a further preferred embodiment of the present invention. Said splice tray 300 differs from the splice tray 100 mainly by the configuration of the securing means 318, the outer splice support wall portions 305, and the inner splice support wall portions 306. Similar reference signs refer to similar parts as described above.

As particularly shown in Fig. 6A, the securing means 318 is formed of a longitudinal single insert comprising a plurality of parallel securing grooves 338 extending in guiding path direction. The securing means 318 is clamped into the guiding path 114 by means of a pair of protrusions (not shown) protruding a lateral side of the securing means 318 wherein said pair of protrusions is received within respective protrusion receiving openings 308 provided by the outer splice support wall portion 305 and the inner splice support wall portion 306 forming the guiding path 114. Thus, the securing means 318 may be simply clipped into the guiding path 114 to be secured in guiding path direction and perpendicular thereto against the splice support plate 102. Thus, said securing means 318 provides a reliable securing for optical fibre cables received in the respective securing grooves 338. Said securing grooves 338 operate in a manner similar to the securing means 118 described above.

Fig. 6B shows a side view of the splice tray 300 from the lateral end side 115 thereof. As particularly shown therein, the entrance holding rib 122 projecting the guiding path 114 at the entrance 115, is provided at a height corresponding substantially to a projecting height of the securing means 318. Preferably, the lower side of the entrance holding rib 122, which lower side faces the front surface side 104, projects the guiding path 114 by a height smaller than a top side of the securing groove 338 of the securing means 318. Hence, a distance between the front surface side 104 and the lower side of the entrance holding rib 122 is smaller than a distance between said front surface side 104 and the top side of the securing groove 338. According thereto, the optical fibre cable received within the guiding path 114 and secured by the securing means 318 may be prevented from coming out of the securing means 318 and from being twisted when the splice tray 300 is hinged. In other words, a bending of the optical fibre cable between the entrance 115 and the securing means 318 may be reduced to a minimum extent. Said effect is further improved by the provision of three guiding path holding ribs 124 in front of the securing means 318 and in extension direction of the guiding path 114 behind said securing means 318 (Fig. 6D). Said guiding path holding ribs 124 are arranged alternately, wherein the middle guiding path holding rib 124 is supported by the outer splice support wall portion 305. The afore-described configuration may be also applied to the first preferred embodiment at least partially. Said outer splice support wall portion 305 extends at the lateral end side of the splice support plate 102 to the round-shaped edge of the splice support plate 102. In comparison with the first preferred embodiment of the splice tray 100, this preferred embodiment does not comprise the protruding pins 122. However, similar effects may be obtained by the larger longitudinal length of the outer splice support wall portion 305.

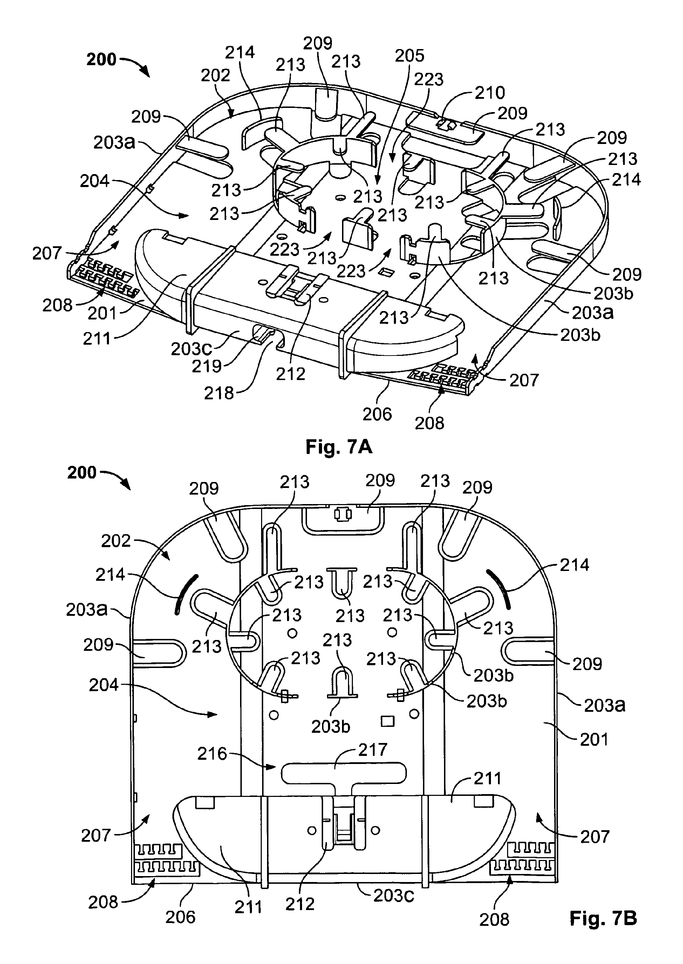

Figs. 7A to 7C show different views of a storage tray 200 according to a preferred embodiment of the present invention. The storage tray 200 comprises a fibre support plate 201 for receiving on the front surface side 202 thereof, at least one optical fibre cable. The front surface side 202 is projected by a plurality of fibre support wall portions 203a, 203b, 203c, which surround a loop storage area 204, 205 for storing the at least one looped optical fibre cable. The fibre support wall portions 203a, 203b, 203c comprises two outer fibre support wall portion 203a, 203c and a plurality of inner fibre support wall portions 203b. The outer fibre support wall portions 203a, 203c project the front surface side 202 at the periphery of said fibre support plate 201. The fibre support plate 201 is basically formed of a rectangular shape with two rounded off edges at one lateral side of the fibre support plate 201. The lateral end sides connected with each other by the rounded off edges are projected by one outer fibre support wall portion 203a which provides abutment faces for the at least one received looped optical fibre cable on the side facing the front surface side 202. Said outer fibre support wall portion 203a adopts the shape of the rounded off edge of the fibre support plate 201. Said rounded off edge is formed by a radius larger than the critical radius of the optical fibre cable to be stored to prevent a kink when the optical fibre cable is looped in the loop storage area 204. The lateral end side 206 not provided with the outer fibre support wall portions 203a, is partially projected by the other outer fibre support wall portion 203c. Said outer fibre support wall portion 203c is C-shaped, wherein the end wall portions thereof are arranged on the fibre support plate 201. The outer fibre support wall portion 203c has a longitudinal length shorter than the lateral end side 206. Thus, a space is formed between each end portion of the C-shape and the opposing outer fibre support wall portions 203a. Each space provides a lateral storage tray entrance 207 for the optical fibre cable. At the lateral storage tray entrance 207, two longitudinal openings are recessed in the fibre support plate 201 side by side, wherein the recessed openings extends in parallel to the lateral end side 206. Each recessed opening comprises a plurality of T-shaped bars protecting within the plurality of openings toward the lateral end side 206. Said recessed openings including the T-shaped bars forms a retaining portion 208 for retaining thereon an incoming and/or outgoing optical fibre cable by means e.g. of tie-wrap as described with respect to the splice tray 100. Particularly, the tie-wrap may be inserted through the openings and wrap around the incoming and/or outgoing optical fibre cable partially supported by the T-shaped bar. Thereby, the incoming and/or outgoing optical fibre cable may be simply retained at the entrance side of the storage tray 200.

The outer fibre support wall portion 203a supports a five loop storage holding ribs 209 distributed along the three lateral end sides, wherein said loop storage holding ribs 209 projects the front surface side 202 with a height adapted to hold the looped optical fibre cable in the loop storage area 204. The loop storage holding rib 209 provided in a middle of a lateral end side opposing the lateral end side 206 provides on a surface side thereof which faces away from the front surface side 202, a lid attachment means 210 for securing a storage tray lid (not shown) against the storage tray 200. By said lid, at least the loop storage area 204 may be covered thereby.

The C-shaped outer fibre support wall portion 203c supports a cover 211 projecting the front surface side 202 and partially covering the loop storage area 204. Particularly, said cover 211 covers an area enclosed by the C-shape form. The cover 211 provides on a surface side facing away the front surface side 204, a storage tray attachment 212 for securing the storage tray 200 against the frame 4. Said storage tray attachment 212 forms a slide-in module to be inserted into a respective insertion hole provided with the frame 4. Thus, the storage tray 200 may be attached to the frame 4 by a sliding motion in parallel to an extension direction of the passageways 5. The storage tray 200 may be stationary secured against the frame 4, wherein the entrance 207 opposes the base 2. The storage tray 200 is arranged at the frame 4 as a rear part of the tray assembly 1, wherein splice trays 100, 300 are arranged in front of the storage tray 200, thereby forming a cover for the loop storage area 204. Accordingly, the front surface side 202 of the storage tray 200 is at least partially covered by the rear surface side 103 of the splice tray 100, 300.

The storage tray 200 comprises an inner loop storage area 205 within the loop storage area 204, wherein said inner loop storage area 205 is formed by the inner fibre support wall portions 203b. Said inner loop storage area 205 is essentially oval shaped, wherein the inner fibre support wall portions 203b provides at opposing surface sides abutment faces for optical fibre cables looped outside and inside of the inner loop storage area 205. Said inner fibre support wall portions 203b support a plurality of inner holding ribs 213 projecting the front surface side 204 in the loop storage area 204 and the inner loop storage area 205. Particularly, the inner holding ribs 213 projecting the loop storage are 205 are alternately arranged with the loop storage holding ribs 209. The inner loop storage area 205 provides a plurality of openings 223 between the inner fibre support wall portions 203b for allowing entrance of the optical fibre cables to the inner loop storage area 205. Specifically, a pair of openings 223 is provided opposing to the lateral end side 206. A further pair of openings 223 is provided in opposing direction of said first pair of openings 223, wherein said two pairs of openings 223 are aligned with respect to each other. Adjacent to the first pair openings 223, further openings 223 are provided.

In an area between the inner loop storage area 205 and the curved portion of the outer fibre support wall portion 203a, the loop storage area provides a guiding wall 214 dividing the loop storage area 204 in said area in two optical fibre cable guiding sections. Said guiding wall 214 provides with its surface sides facing the inner surface side of the outer fibre support wall portion 203a and the outer surface side of the inner fibre support wall portion 203b abutment faces for the looped optical fibre cable. As shown in Figure 7B, said guiding wall 214 is essentially arranged at a longitudinal end side of the inner holding rib 213 projecting the loop storage area 204.

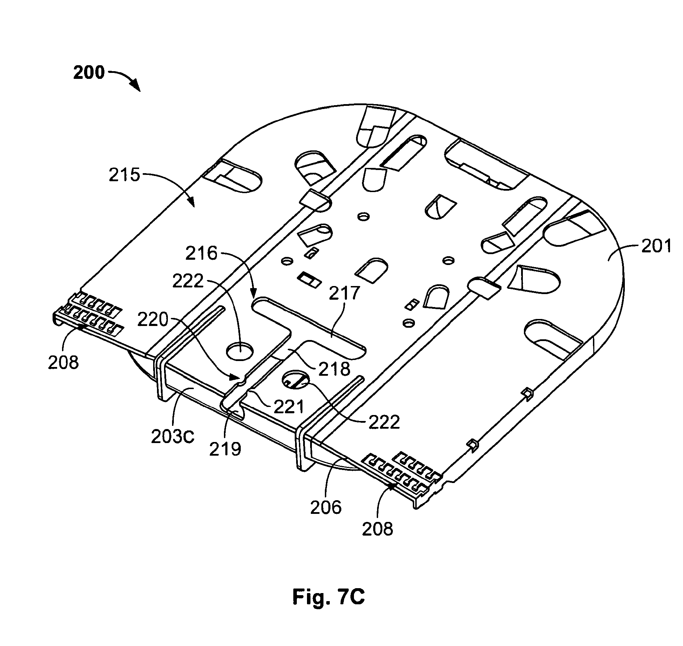

As shown in Figs. 7B and 7C, the fibre support plate 201 provides a receiving opening 216 having a T-shape. Particularly, a first leg 217 of the T-shaped receiving opening 216 extends parallel to the lateral end side 206 providing the lateral storage entrance 207. The second leg 218 of the T-shape extends from the first leg 217 to said lateral end side 206. The second leg 218 communicates with a recess 219 formed in the outer fibre support wall portion 203c. Said recess 209 is essentially oval shaped and projects a width of the second leg 218 in extension direction of the lateral end side 206. In other words, a width of the recess 219 is larger than a corresponding width of the second leg 218. The second leg 218 comprises a constriction 220 formed by opposed tapered projections 221 projecting the second leg 218 in opposing directions. Between said opposing tapered projections 221, a slit is provided.

The receiving opening 216 allows insertion of at least one optical fibre cable from a rear surface side 215 of the fibre support plate 201. Particularly, the insertion of the looped optical fibre cable may be conducted as follows. The optical fibre cable may be inserted from the rear surface side 215 by previously bending a predetermined portion of the optical fibre cable and inserting said bent optical fibre cable portion through the first leg 217 of the receiving opening 216. The first leg 217 forms a longitudinal opening with an opening size meeting a bending characteristic of the optical fibre cable. In other words, the opening size of the first leg 217 is at least 2-fold the critical bent radius of the optical fibre cable. The insertion of the optical fibre cable from the rear surface side may be conducted in a secured state of the storage tray 200 that is the storage tray 200 may be secured against the support 3 or in a released state thereof. After inserting the bent portion of the optical fibre cable, the optical fibre cable is pulled until a cable length is achieved sufficient for forming the required loop within the loop storage area 204 or within the inner loop storage area 205. The optical fibre cable portion directing toward and away from the loop may be then concentrated and inserted through the second leg 218 to extend on the front surface side 202 through the recess 219. In the secured state of the storage tray 200, said optical fibre cable portions leave the storage tray 200 essentially in parallel to the front surface side 202 of the storage tray 200. The optical fibre cable portions leaving the storage tray 200 through the recess 219 may be secured by e.g. a tie-wrap inserted through fixation holes 222 provided opposing to each other on both sides of the second leg 218 in the fibre support plate 201 (Fig. 7C). Thereby, the respective optical fibre cable portions may be guided concentrated from the loop storage area 204 or from the inner loop storage area 205 through the recess 219 towards the base 2 without the risk of forming a bend in said respective optical fibre portions by coming out of the second leg 218 and protruding from the rear surface side 215.

Based on the above configuration of the splice tray 100, 300 and the storage tray 200, the space provided by each of the splice support plate 102 and the fibre support plate 201 is efficiently used for organizing thereon the optical fibre cable. Further, the configuration of said trays allows a smaller size thereof in case of need, whereby the tray assembly 1 may be designed with a reduced size in a more compact manner. Moreover, the storage tray 200 provides the possibility of clear arranging different kinds of optical fibre cables on the front surface side 202. For instance, spliced optical fibre cables may be arranged in the loop storage area 204, whereas slack optical fibre cables, stranded optical fibre cables or the like only to be looped may be stored within the inner loop storage area 205, wherein said optical fibre cables may be separated from each other due to their respective usage.

### Reference list

- 1: tray assembly
- 2: base
- 3: support
- 4: support frame
- 5: passageway
- 6: guiding frame
- 7: frame side wall
- 8: receiving hole
- 100, 300: splice tray
- 102: splice support plate
- 103: rear surface side of the splice tray
- 104: front surface side of the splice tray
- 105, 305: outer splice support wall portion
- 106, 306: inner splice support wall portion
- 108: lateral splice support wall portion
- 110: organizing area
- 112: splice holder
- 113: attachment portion
- 114: guiding path
- 115: entrance
- 116: lateral end side of the splice support plate
- 118, 318: securing means
- 120: opposed lateral end side of the splice support wall
- 122: entrance holding rib
- 124: guiding path holding rib
- 126: loop storage holding rib
- 128, 210: lid attachment means
- 130: hinge
- 132: ligament
- 134: pin
- 136: splicing grooves
- 138, 338: securing grooves
- 140, 208: retaining portion
- 142: handle element
- 144: hinge
- 146: splice tray attachment means
- 148: protrusion pin
- 150: holding means
- 152: organizing area entrance
- 154: further holding rib
- 156: bridging element
- 200: storage tray
- 201: fibre support plate
- 202: front surface side of the storage tray
- 203a: outer fibre support wall portion
- 203b: inner fibre support wall portion
- 203c: lateral fibre support wall portion
- 204: loop storage area
- 205: inner loop storage area
- 206: lateral end side of the storage tray
- 207: lateral storage tray entrance
- 209: loop storage holding rib
- 211: cover
- 212: storage tray attachment
- 213: inner holding rib
- 214: guiding wall
- 215: rear surface side of the storage tray
- 216: receiving opening
- 217: first leg of the T-shaped receiving opening
- 218: second leg of the T-shaped receiving opening
- 219: recess
- 220: constriction
- 221: tapered projection
- 222: fixation hole
- 308: protrusion receiving opening

## Claims

1. A tray assembly (1) for organizing a plurality of optical fibre cables by forming a loop, the tray assembly (1), comprises
at least one storage tray (200) comprising a fibre support plate (201) for receiving on a front surface side (202) thereof at least one optical fibre cable, the front surface side (202) is projected by a plurality of fibre support wall portions (203a, 203c) surrounding at least partially a loop storage area (204) for storing the at least one looped optical fibre cable, and
a base (2) adapted to sealingly receive a cover for covering the at least one storage tray (200) and providing passageways (5) for sealingly guiding the optical fibre cable through said base (2), which base (2) is connected to a support (3) for holding the storage tray (200);
**characterized in that**
the storage tray (200) comprises at least one receiving opening (216) recessed within the loop storage area (204) for receiving at least one of the plurality of optical fibre cables, wherein the receiving opening (216) is L-shaped with a leg (218) extending to a lateral end side (206) of the fibre support plate (201).

2. The tray assembly (1) according to claim 1, **characterized in that** the storage tray (200) comprises an inner loop storage area (205) within the loop storage area (204) and adjacent to the receiving opening (216).

3. The tray assembly (1) according to claim 1 or 2, **characterized in that** the lateral end side (206) of the fibre support plate (201) is projected by a lateral fibre support wall portion (203c) defining the loop storage area (204) at said lateral end side (206), wherein the lateral fibre support wall portion (203c) comprises a recess (219) communicating with the leg (218) of the receiving opening (216).

4. The tray assembly (1) according to any one of the preceding claims, **characterized in that** the tray assembly (1) further comprises
at least one splice tray (100; 300) comprising:
a splice support plate (102) for receiving on a front surface side (104) thereof at least one optical fibre cable, wherein the front surface side (104) of the splice support plate (102) is projected by a plurality of splice support wall portions (105, 106, 108), which surround at least partially an organizing area (110), in which an optical fibre splice holder (112) is arranged, which provide outside of the organizing area (110) at least one guiding path (114) for guiding the at least one received optical fibre cable to the organizing area (110) and which provide an entrance (115) to said guiding path (114) at a lateral end side (116) of the splice support plate (102);
securing means (118; 318) received within the guiding path (114);
and an entrance holding rib (122) or a guiding path holding rib (124), wherein the holding rib (122; 124) at least partially covers the guiding path (114) by projecting the splice support plate (102) with a height equal or smaller than that of the securing means (118; 318), wherein the base (2) is further adapted to pivotably hold the at least one splice tray (100; 300) such that the entrance (115) to the guiding path (114) is arranged opposed to the base (2).

5. The tray assembly (1) according to claim 4, **characterized in that** the securing means (118; 318) is disposed downstream of the entrance holding rib (122) with respect to the lateral end side (116) of the splice tray (100; 300).

6. The tray assembly (1) according to claim 4 or 5, **characterized in that** the guiding path holding rib (124) is arranged adjacent to the securing means (118; 318).

7. The tray assembly (1) according to any one of claims 4 to 6, **characterized in that** the guiding path (114) extends essentially straight-line from the entrance (115) in opposing direction thereto, wherein the securing means (118; 318) is received within the straight portion of the guiding path (114).

8. The tray assembly (1) according to any one of claims 4 to 7, **characterized in that** the securing means (118; 318) is releasably secured against at least one of the plurality of splice support wall portions (105, 106, 108) or against the bottom plate of the guiding path (114) or is an integral part of the splice tray (100; 300).

9. The tray assembly (1) according to any of claims 4 to 8, **characterized in that** at least one of the plurality of splice support wall portions (105, 106, 108) extend from the lateral end side (116) providing the entrance (115) toward an opposed lateral end side (120) thereof, wherein said one splice support wall portion (106) is projected at said lateral end side (116) by the entrance holding rib (122) which extends toward the guiding path (114) essentially in parallel to the front surface side (104) of the splice tray (100; 300).

10. A storage tray (200) having the features as defined in any one of claims 1 to 3.
